# FASCICULE DE BREVET EUROPEEN

(11) **EP 2 849 970 B1**
(45) Date de publication et mention de la délivrance du brevet: **06.04.2016**
(21) Numéro de dépôt: 13722493.7
(22) Date de dépôt: 17.04.2013
(51) Int. Cl.: B60R 7/04, B60R 7/06

(54) **VIDE-POCHES SOUS-SIEGE DE VEHICULE AVEC MOYENS FUSIBLES DE LIMITATION DE L'ANGLE D'OUVERTURE DE LA PORTE**
HANDSCHUHFACH UNTER EINEM SITZ MIT ÜBERLASTSICHERUNGSMITTELN ZUR BEGRENZUNG DES ÖFFNUNGSWINKELS DER TÜR
GLOVE COMPARTMENT UNDER THE VEHICLE SEAT WITH OVERLOAD SAFETY MEANS FOR LIMITING THE OPENING ANGLE OF THE DOOR HAVING

(30) Priorité: 15.05.2012 FR 1254412
(43) Date de publication de la demande: 25.03.2015
(73) Titulaire: PSA Peugeot Citroën Automobiles S.A., 78140 Velizy Villacoublay (FR)
(72) Inventeur: COMBEAU, Frederic, F-25750 Desandans (FR)
(86) Numéro de dépôt international: PCT/FR2013/050844
(87) Numéro de publication internationale: WO 2013/171387

(56) Documents cités:
- DE-A1- 3 611 094
- DE-A1-102010 005 812
- FR-A1- 2 950 007
- US-A- 6 085 953
- US-A1- 2010 162 522
- US-B1- 6 485 097

## Description

L'invention concerne les vide-poches et en particulier les vide-poches embarqués dans des véhicules, par exemple des véhicules automobiles. L'invention s'adresse préférentiellement aux vide-poches disposés sous les sièges desdits véhicules.

Il est connu des systèmes de rangement intérieurs à l'habitacle d'un véhicule se présentant sous forme de coffre dont le couvercle se soulève pour accéder à l'espace de rangement. Le document DE102010005812 décrit un tel système dont on peut ajuster la position du couvercle grâce à des éléments élastiques. Le document US 2010/162522 A1 décrit une boîte à gants comprenant une porte pivotante.

Lorsque le système de rangement est disposé sous les sièges d'un véhicule, il se présente le plus souvent sous forme de tiroirs. Par exemple, le document FR2778156 propose un bac de rangement sous-siège de véhicule pouvant coulisser aussi bien vers l'avant que vers l'arrière du siège. Le dispositif comprend des glissières et des dispositifs de retenue élastiques. Les dispositifs de retenue comprennent des bossages qui coopèrent avec un doigt pour maintenir le tiroir en position centrale rangée et pour limiter ses mouvements.

Il est également connu de remplacer les systèmes de rangement sous-siège à tiroir par des vide-poches. Les vide-poches sont des compartiments formant des cuves délimitant une ouverture généralement frontale et pouvant être obturée par une porte pivotante au niveau de son extrémité inférieure. Généralement, des moyens sont prévus pour limiter l'angle d'ouverture de la porte, et donc l'empêcher de s'ouvrir excessivement.

Ces moyens peuvent être simples se limitant à un cordon reliant la porte à la cuve ou plus élaborés incorporant des amortisseurs de fin de course comme décrit dans le document DE 3720815 A1. Un moyen classique de limitation de l'angle d'ouverture de la porte est porté par la porte elle-même. Il comprend des bras latéraux en forme de secteur annulaire disposés dans un plan perpendiculaire à l'axe de pivotement de la porte. Les bras passent dans des fentes du corps de la boîte à gants. L'extrémité du bras la plus éloignée de la porte présente un organe d'arrêt agissant en général au contact avec la face du corps voisine de la fente, dans la position d'ouverture de la porte.

Ainsi, le document WO2007135287 présente une boite à gants avec une telle porte basculante. La porte présente un bras passant dans une fente du corps de la cuve pour limiter l'angle de pivotement de la porte. Le bras porte en outre un dispositif de rappel élastique qui exerce une force ascendante luttant contre la force de gravitation et assurant une remise en place centrée de la porte en position fermée.

L'un des problèmes rencontrés par les vide-poches, dont les portes présentent de tels dispositifs de limitation de l'angle d'ouverture, est le risque de détérioration lié à l'application d'un poids excessif sur la porte. Pour les applications à des vide-poches sous-siège de véhicule, le problème se pose plus particulièrement lorsque le siège sous lequel se trouve le vide-poches est un siège haut comme par exemple un siège de monospace. Lorsque la porte est ouverte, celle-ci ne repose alors pas sur le sol de l'habitacle. Si l'utilisateur surcharge accidentellement la porte - soit en y posant un objet lourd, soit en s'y appuyant avec le pied - la porte sera poussée en direction du sol jusqu'à ce qu'elle puisse s'y reposer. Ceci engendre une dégradation, le plus souvent une destruction, de son système de limitation d'angle d'ouverture. L'utilisateur n'a alors plus d'autre choix que de faire remplacer la porte ou le vide-poches.

Il serait donc intéressant de proposer un système pour lequel l'application d'une force excessive sur la porte n'engendre pas une dégradation de cette dernière et/ou de son système de limitation d'angle d'ouverture. Par ailleurs, en raison de contraintes économiques, il est préférable que les dispositifs embarqués sur les véhicules présentent un poids minimal et résultent de l'assemblage d'un nombre minimum de pièces.

L'invention a pour objectif de répondre à au moins un des inconvénients présentés par l'art antérieur. En particulier l'invention a pour objectif de proposer un vide-poches avec un système de limitation d'ouverture de porte qui n'est pas dégradé par l'application d'une force exceptionnelle sur la porte.

A cet effet l'invention a pour objet un dispositif de rangement pour siège de véhicule comprenant une cuve qui délimite une ouverture et une porte pivotante destinée à fermer l'ouverture, la porte comprenant un panneau d'obturation et au moins une aile latérale reliée audit panneau d'obturation, au moins une aile latérale présentant une découpe formant une glissière et recevant au moins un pion porté par la cuve, remarquable en ce qu'il présente au moins un moyen de rétrécissement de sa largeur de la glissière de sorte qu'une portion de la glissière présente une largeur inférieure à la largeur du pion.

Selon des modes particuliers de réalisation, l'ensemble peut comprendre une ou plusieurs des caractéristiques suivantes, prises isolément ou selon toutes les combinaisons techniquement possibles :
- au moins un moyen de rétrécissement de la largeur de la glissière constitue un moyen fusible de limitation de l'angle d'ouverture de la porte.
- la glissière présentant au moins un bord de guidage sur lequel glisse le pion, le dispositif est remarquable en ce qu'au moins un moyen de rétrécissement de la largeur de la glissière comprend au moins un bossage faisant saillie depuis le ou les bords de guidage.
- la découpe formant une glissière est débouchante sur un coté de l'aile différent de celui relié au panneau d'obturation.
- le dispositif présente en outre un élément de renfort enjambant la glissière.
- l'élément de renfort est positionné sur la longueur de la glissière en un emplacement différent du moyen de rétrécissement de la largeur de la glissière, de manière à ne pas être superposé audit moyen de rétrécissement.
- l'élément de renfort est positionné sur la glissière au niveau où celle-ci débouche sur un côté de l'aile.
- le pion présente un profil biseauté dont la partie la plus fine est orientée en direction de l'ouverture de la cuve.
- la cuve et la porte sont moulées en matériaux plastiques différents, de préférence le matériau plastique constituant la porte présente une rigidité inférieure à celui constituant la cuve.
- Le dispositif comprend au moins un empiochage et/ou au moins une zone de vissage pour la fixation dudit dispositif sur l'armature de l'assise d'un siège.
- la porte est montée pivotante autour de deux portions d'axe de rotation portés par les côtés latéraux de la cuve.
- les portions d'axes de rotation de la cuve sont pourvus de moyens de verrouillage.

L'invention a également pour objet un véhicule remarquable en ce qu'il comprend au moins un dispositif de rangement tel que défini ci-dessus.

Comme on l'aura compris à la lecture de la définition qui vient d'en être donnée, l'invention consiste à doter un vide-poches d'un système fusible de limitation d'ouverture de porte. Ainsi lorsqu'une force excessive est appliquée sur la porte, le caractère fusible du système de limitation d'ouverture de porte autorise la porte à poursuivre sa course d'ouverture jusqu'à se poser contre le sol de l'habitacle du véhicule. Le système fusible n'est pas dégradé lors de sa mise en oeuvre ce qui permet à l'utilisateur de remettre en place la porte. Pour ce faire, l'invention joue préférentiellement sur les propriétés des matériaux utilisés pour mouler la porte et la cuve. La porte est moulée dans un matériau plus souple que celui de la cuve. Lors de l'application d'une force excessive, la porte va se déformer réversiblement au niveau de son système fusible de limitation d'ouverture de porte. La remise en place de la porte se fait également en utilisant les propriétés de déformation de la porte.

L'invention sera bien comprise et d'autres caractéristiques et avantages apparaitront clairement à la lecture de la description qui va suivre donnée en référence aux planches de dessins annexées sur lesquelles :
- la figure 1 présente une vue surélevée d'un dispositif de rangement selon l'invention dont la porte est fermée ;
- la figure 2 présente une vue similaire à celle de la figure 1 lorsque la porte est ouverte ;
- la figure 3 présente une vue détaillée du système fusible de limitation d'angle d'ouverture de la porte selon l'invention ;
- la figure 4 illustre le passage par le pion du moyen de rétrécissement de la glissière lors de l'application d'une force exceptionnelle sur la porte.

Sur les différentes figures, les mêmes références désignent des éléments identiques ou similaires.

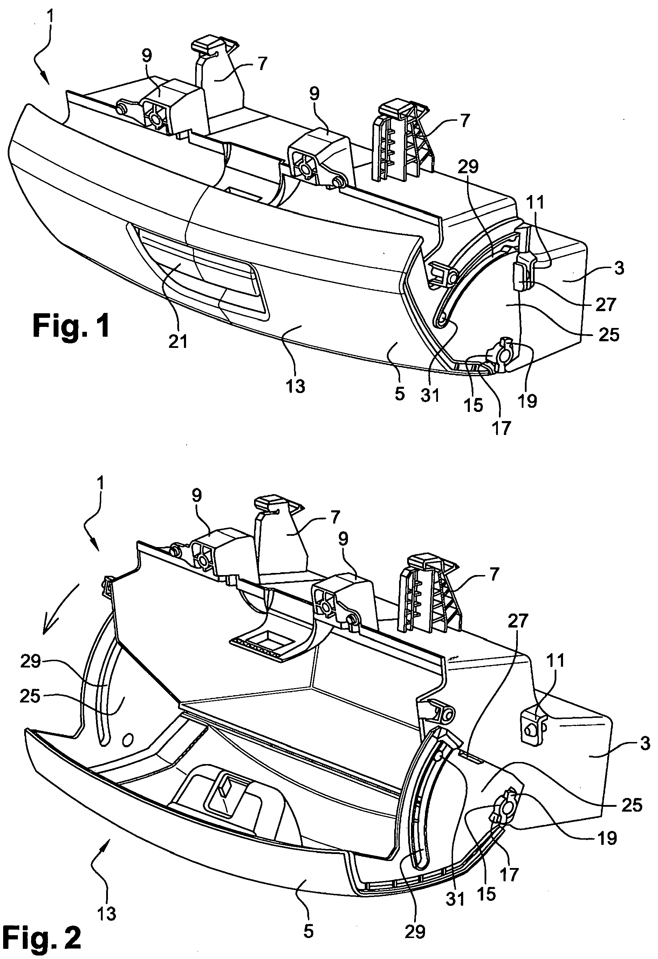

On se référera en premier lieu aux figures 1 et 2 présentant un dispositif de rangement (1) selon d'invention. Le dispositif de rangement (1) est représenté fermé sur la figure 1 et ouvert sur la figure 2. Ce dispositif de rangement (1) se compose principalement d'un corps (3) formant une cuve délimitant une ouverture frontale. Cette ouverture est destinée à être fermée par une porte (5) montée pivotante autour d'un axe disposé à proximité du côté inférieur de l'ouverture. On comprendra que l'invention ne se limite pas à un tel mode de réalisation et s'applique à tous types de portes montées pivotantes quelque soit l'orientation de l'axe de pivotement de la porte.

Selon un mode de réalisation préféré de l'invention, le dispositif de rangement (1) est un vide-poches destiné à être fixé sous un siège de véhicule. A cet effet, la cuve (3) présente avantageusement sur sa face supérieure des moyens de fixation à l'assise du siège et plus particulièrement à l'armature de ladite assise. Ces moyens de fixation comprennent au moins un, et de préférence deux empiochages (7) et/ou des emplacements (9) de vissage destinés à la fixation de la cuve au moyen de vis. Avantageusement, les moyens de fixation du dispositif de rangement sont venus de matière avec la cuve (3).

La cuve (3) présente en outre au moins une butée (11) aidant au positionnement de la porte (5) lors de sa fermeture. Cette butée (11) forme une saillie moulée sur la cuve (3) contre laquelle vient se placer la porte (5) définissant sa position de fermeture. La butée (11) présente éventuellement un organe amortisseur en caoutchouc permettant de limiter les bruits. La butée (11) est elle aussi préférentiellement venue de matière avec la cuve (3).

La porte (5) présente un panneau d'obturation (13) destinée à fermer l'ouverture de la cuve (3). La porte (5) est montée pivotante sur la cuve (3) au niveau de son bord inférieur autour d'un axe de pivotement orienté horizontalement. Les moyens pour assurer le pivotement de la porte comprennent par exemple deux portions d'axe (15) saillants depuis les cotés latéraux de la cuve (3) et venus de matière avec elle. Les portions d'axe (15) s'insèrent dans des ouvertures (17) présentées par la porte (5).

Un dispositif de maintien de la porte (5) sur la cuve (3) est prévu. Ce dispositif se présente sous forme d'un embout (19) disposé à l'extrémité des axes (15) de pivotement et s'étendant sur un plan perpendiculaire à celui de l'axe. Pour assurer sa fonction, l'embout (19) présente une forme non circulaire, par exemple une forme de papillon. La présence de cet embout (19) n'autorise l'insertion ou la sortie des axes (15) dans les ouvertures (17) de la porte, dont la géométrie est complémentaire à la forme présentée par l'embout (19), que selon une certaine orientation angulaire de la porte (5) vis-à-vis de la cuve (3).

La porte (5) comprend également de manière connue une poignée (21) de déverrouillage montée pivotante de telle sorte que son actionnement bouge un pêne (non représenté) venant se placer ou sortir d'une gâche (23) portée par la cuve (3).

Selon l'invention, la porte (5) comprend en outre deux bras latéraux se présentent sous forme d'ailes latérales (25). Les ailes (25) s'étendent depuis le panneau d'obturation (13) dans une direction perpendiculaire à l'axe de pivotement de la porte, soit selon une direction parallèle aux flancs latéraux de la cuve (3). Les ailes latérales (25) sont préférentiellement venues de matière avec le panneau d'obturation (13). Les ouvertures (17) destinées à recevoir les portions d'axe (15) de pivotement sont disposées sur lesdites ailes (25). Les ailes latérales (25) présentent en outre des moyens de butée (27) complémentaires à la butée (11) portée par la cuve (3). Les ailes latérales (25) présentent également des moyens de limitation de l'angle d'ouverture de la porte comme nous allons le voir.

Les ailes latérales (25) de la porte (5) présentent des découpes formant des glissières (29). Chaque aile (25) montre au moins une glissière (29). La glissière (29) est formée par une rainure traversante présentant au moins un et de préférence deux bords de guidage. La largeur de la glissière est définie par la distance d'écartement des deux bords de guidage. La glissière (29) présente une forme générale d'arc de cercle afin d'accompagner le mouvement de pivotement de la porte (5) au moment de son ouverture ou de sa fermeture. Selon l'invention, les découpes formant les glissières (29) débouchent sur le coté de l'aile (25) opposé à celui prenant naissance sur le panneau d'obturation (13).

Les glissières (29) reçoivent chacune, entre leurs bords de guidage, un pion (31) porté par la cuve (3) sur ses flancs latéraux. Les pions (31) sont préférentiellement venus de matière avec la cuve (3). Lors de l'ouverture ou de la fermeture de la porte (5), les pions, immobiles sur la cuve (3), vont glisser le long des bords de guidage de la glissière (29) jusqu'à rencontrer des moyens de limitation de l'angle d'ouverture de la porte formés par au moins un moyen de rétrécissement (33) de la largeur de la glissière (29). Selon l'invention la largeur de la glissière (29) est rétrécie de sorte à présenter localement une largeur inférieure à la largeur du pion (31). Le pion (31) va buter contre lesdits moyens de rétrécissement (33) ce qui va limiter l'angle d'ouverture de la porte (5).

L'invention est remarquable en ce que les moyens de limitation de l'angle d'ouverture portés par la porte (5) sont fusibles, si bien qu'il est possible d'ouvrir la porte (5) selon un angle plus important que celui imposé par ses moyens de limitation de l'angle d'ouverture sans pour autant la détériorer.

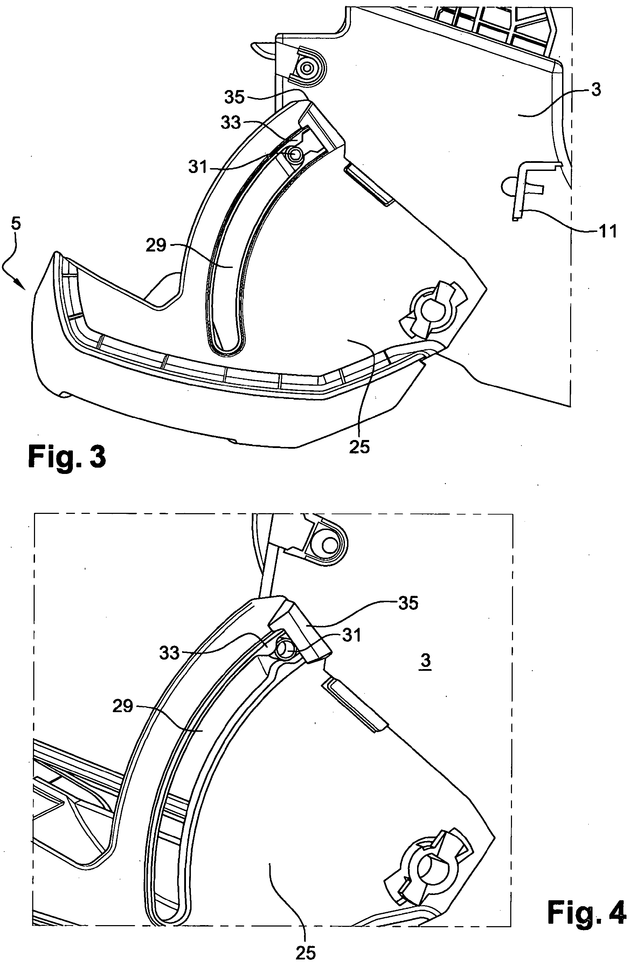

A cet effet la glissière (29) est comme on l'a vu débouchante. Comme on le voit plus clairement sur la figure 3, les moyens de rétrécissement (33) réduisent localement la largeur de la glissière (29) sans pour autant la fermer totalement. Ils comprennent au moins un, et de préférence deux bossages, faisant saillie depuis au moins un bord de guidage de la glissière (29) en direction du centre de celle-ci. Sous l'application d'une force normale, le pion (31), qui est de largeur supérieure à la largeur présentée par la glissière au niveau du ou des bossages, ne peut pas effectuer la totalité de la course le long de la glissière (29). Lors de l'application d'une force exceptionnelle, la porte (5) va se déformer en ce que les bords de guidage de la glissière (29) vont s'écarter et laisser passer le pion (31) au-delà des moyens de rétrécissement (33). Le pion (31) va alors poursuivre sa course jusqu'au bout de la glissière (29). En fonction de l'angle pris pour que la porte touche le sol, le pion (31) peut aller jusqu'à sortir de la glissière (29) qui est à cet effet débouchante. La déformation de la porte permettant l'écartement des bords de guidage de la glissière (29), est une déformation plastique due à l'emploi d'un matériau souple au niveau de la porte (5). De préférence le matériau employé pour mouler la porte (5) montre une rigidité inférieure au matériau utilisé pour mouler la cuve (3). Par exemple, la cuve (3) peut être moulée en polypropylène (PP) et la porte peut être moulée en acrilonitrile-butadiène-styrène/polycarbonate (ABS/PC).

En renfort, et pour éviter qu'en raison de phénomènes de vieillissement les bords de guidage de la glissière (29) s'écartent naturellement ou en application d'une force normale, la porte (5) présente avantageusement un élément (35) de renfort disposé au bout de la glissière (29) et formant un pont enjambant la glissière (29). La taille de l'élément de renfort (35) et du pion (31) sont prévus pour que le pion (31) puisse passer sous l'élément de renfort (35) au besoin, si par exemple les conditions indiquaient qu'il doive sortir de la glissière (29). L'élément de renfort (35) est positionné sur la longueur de la glissière en un emplacement différent du moyen de rétrécissement (33) de la largeur de la glissière (29), de manière à ne pas être superposé audit moyen de rétrécissement (33). En effet, une telle superposition nuirait aux possibilités de déformation de l'aile (25) par écartement des bords de la glissière (29) permettant le passage du pion (31) sous l'application d'une force exceptionnelle. De préférence, l'élément de renfort (35) est situé au niveau où la glissière débouche sur un des côtés de l'aile (25).

Après l'application d'une force exceptionnelle engendrant l'activation du caractère fusible des moyens de limitation de l'angle d'ouverture, la remise en place de la porte (5) se fait de la façon suivante : au besoin, l'utilisateur réengage le pion (31) dans la glissière (29) et applique une force suffisante pour provoquer à nouveau l'écartement des bords de la glissière (29). Les bossages (33) forment un point dur dont le passage indique à l'utilisateur que la porte (5) est remise en place. Avantageusement, le pion (31) présente un profil biaisé dont la partie la plus fine est judicieusement orientée pour faciliter la remise en place de la porte (5), c'est à dire en direction de l'ouverture de la cuve (3).

Selon l'invention les ouvertures (17) de la porte sont orientées pour ne pas autoriser la sortie ou l'insertion des axes (15) tant que lorsque le pion (31) glisse le long de la glissière (29) entre l'extrémité de la glissière (29) la plus proche du panneau d'obturation (13) de la porte et les moyens de rétrécissement (33) de ladite glissière (29). Aussi le mode de remise en place de la porte est également celui du montage de celle-ci.

## Revendications

1. Dispositif de rangement (1) pour siège de véhicule comprenant une cuve (3) qui délimite une ouverture et une porte (5) pivotante destinée à fermer l'ouverture, la porte (5) comprenant un panneau d'obturation (13) et au moins une aile latérale (25) reliée audit panneau d'obturation (13), au moins une aile latérale (25) présentant une découpe formant une glissière (29) et recevant au moins un pion (31) porté par la cuve (3), **caractérisé en ce qu'**il présente au moins un moyen de rétrécissement (33) de la largeur de la glissière (29) de sorte qu'une portion de la glissière (29) présente une largeur inférieure à la largeur du pion (31).

2. Dispositif (1) selon la revendication 1, la glissière (29) présentant au moins un bord de guidage sur lequel glisse le pion (31), le dispositif (1) est **caractérisé en ce qu'**au moins un moyen de rétrécissement (33) de la largeur de la glissière (29) comprend au moins un bossage faisant saillie depuis le ou les bords de guidage.

3. Dispositif (1) selon l'une des revendications 1 ou 2 **caractérisé en ce que** la découpe formant une glissière (29) est débouchante sur un coté de l'aile (25) différent de celui relié au panneau d'obturation (13).

4. Dispositif (1) selon l'une des revendications 1 à 3 **caractérisé en ce qu'**il présente en outre un élément (35) de renfort enjambant la glissière (29).

5. Dispositif (1) selon la revendication 4 **caractérisé en ce que** l'élément de renfort (35) est positionné sur la longueur de la glissière en un emplacement différent du moyen de rétrécissement (33) de la largeur de la glissière (29), de manière à ne pas être superposé audit moyen de rétrécissement (33).

6. Dispositif (1) selon l'une des revendications 1 à 5 **caractérisé en ce que** le pion (31) présente un profil biseauté dont la partie la plus fine est orientée en direction de l'ouverture de la cuve (3).

7. Dispositif (1) selon l'une des revendications 1 à 6 **caractérisé en ce que** la cuve (3) et la porte (5) sont moulées en matériaux plastiques différents, de préférence le matériau plastique constituant la porte (5) présente une rigidité inférieure à celui constituant la cuve (3).

8. Dispositif (1) selon l'une des revendications 1 à 7 **caractérisé en ce qu'**il comprend au moins un empiochage (7) et/ou au moins une zone de vissage (9) pour la fixation dudit dispositif (1) sur l'armature de l'assise d'un siège.

9. Véhicule **caractérisé en ce qu'**il comprend au moins un dispositif de rangement selon l'une des revendications 1 à 8.

## Patentansprüche

1. Vorrichtung zur Aufbewahrung (1) für Fahrzeugsitz, umfassend einen Kasten (3), der eine Öffnung begrenzt und eine schwenkbare Klappe (5), die dazu dient, die Öffnung zu verschließen, wobei die Klappe (5) eine Verschlussplatte (13) und mindestens einen seitlichen Flügel (25), der mit der Verschlussplatte (13) verbunden ist, mindestens einen seitlichen Flügel (25), der einen Ausschnitt aufweist, der eine Gleitführung (29) bildet und mindestens einen Bügel (31) aufnimmt, der am Kasten (3) angebracht ist, umfasst, **dadurch gekennzeichnet, dass** sie mindestens ein Einlaufmittel (33) der Breite der Gleitführung (29) aufweist, wobei ein Abschnitt der Gleitführung (29) eine kleinere Breite als die Breite des Bügels (31) aufweist.

2. Vorrichtung (1) nach Anspruch 1, wobei die Gleitführung (29) mindestens eine Führungskante aufweist, auf der der Bügel (31) gleitet, und die Vorrichtung (1) **dadurch gekennzeichnet ist, dass** mindestens ein Einlaufmittel (33) der Breite der Gleitführung (29) mindestens einen Überstand umfasst, der nach dem oder den Führungskanten hervorsteht.

3. Vorrichtung (1) nach einem der Ansprüche 1 oder 2, **dadurch gekennzeichnet, dass** der Ausschnitt, der eine Gleitführung (29) bildet, auf einer Seite des Flügels (25) öffnend ist und sich von der verbundenen Seite mit der Verschlussplatte (13) unterscheidet.

4. Vorrichtung (1) nach einem der Ansprüche 1 bis 3, **dadurch gekennzeichnet, dass** sie außerdem ein Verstärkungselement (35) aufweist, das die Gleitführung (29) überspannt.

5. Vorrichtung (1) nach Anspruch 4 **dadurch gekennzeichnet, dass** das Verstärkungselement (35) an einer anderen Stelle als das Einlaufmittel (33) auf der Länge der Gleitführung der Breite der Gleitführung (29) so positioniert ist, dass es nicht über das Einlaufmittel (33) überlagert ist.

6. Vorrichtung (1) nach einem der Ansprüche 1 bis 5 **dadurch gekennzeichnet, dass** der Bügel (31) ein abgeschrägtes Profil aufweist, dessen feinerer Abschnitt in Richtung zu Öffnung des Kastens (3) ausgerichtet ist.

7. Vorrichtung (1) nach einem der Ansprüche 1 bis 6 **dadurch gekennzeichnet, dass** der Kasten (3) und die Klappe (5) aus verschiedenen Kunststoffen geformt sind, vorzugsweise hat der Kunststoff der Klappe (5) eine niedrigere Steifigkeit als der Kunststoff des Kastens (3).

8. Vorrichtung (1) nach einem der Ansprüche 1 bis 7, **dadurch gekennzeichnet, dass** sie mindestens eine Verrastung (7) und/oder mindestens einen Verschraubungsbereich (9) zur Befestigung der Vorrichtung (1) am Sitzgestell eines Sitzes umfasst.

9. Fahrzeug, **dadurch gekennzeichnet, dass** es mindestens eine Aufbewahrungsvorrichtung nach einem der Ansprüche 1 bis 8 aufweist.

## Claims

1. Storage device (1) for a vehicle seat, comprising an compartment (3) that delimits an opening and a pivoting door (5) intended to close the opening, the door (5) comprising a closure panel (13) and at least one lateral wing (25) connected to said closure panel (13), at least one lateral wing (25) having a cutout forming a runner (29) and receiving at least one pin (31) carried by the compartment (3), **characterised in that** it has at least one means (33) for narrowing the width of the runner (29) so that a portion of the runner (29) has a width less than the width of the pin (31).

2. Device (1) according to claim 1, the runner (29) having at least one guide edge on which the pin (31) slides, the device (1) is **characterised in that** at least one means (33) for narrowing the width of the runner (29) comprises at least one protrusion projecting from the guide edge or edges.

3. Device (1) according to one of claims 1 or 2, **characterised in that** the cutout forming a runner (29) emerges on a side of the wing (25) different from the one connected to the closure panel (13).

4. Device (1) according one of claims 1 to 3, **characterised in that** it further has a reinforcement element (35) spanning the runner (29).

5. Device (1) according to claim 4, **characterised in that** the reinforcement element (35) is positioned over the length of the runner at a position different from the means (33) for narrowing the width of the runner (29), so as not to be superimposed on said narrowing means (33).

6. Device (1) according to one of claims 1 to 5, **characterised in that** the pin (31) has a bevelled profile, the thinnest part of which is oriented in the direction of the opening of the compartment (3).

7. Device (1) according to one of claims 1 to 6, **characterised in that** the compartment (3) and the door (5) are moulded from different plastics materials, preferably the plastics material constituting the door (5) has rigidity less than that constituting the compartment (3).

8. Device (1) according to one of claims 1 to 7, **characterised in that** it comprises at least one stud fastening (7) and/or at least one screwing zone (9) for fixing said device (1) to the frame of the squab of a seat.

9. Vehicle **characterised in that** it comprises at least one storage device according to one of claims 1 to 8.
